# EUROPÄISCHE PATENTSCHRIFT

(11) **EP 1 923 113 B1**
(45) Veröffentlichungstag und Bekanntmachung des Hinweises auf die Patenterteilung: **23.09.2009**
(21) Anmeldenummer: 07022184.1
(22) Anmeldetag: 15.11.2007
(51) Int. Cl.: B01D 11/04, B04B 11/06

(54) **Zentrifuge**
Centrifuge
Centrifugeuse

(30) Priorität: 15.11.2006 DE 102006055719
(43) Veröffentlichungstag der Anmeldung: 21.05.2008
(73) Patentinhaber: CINC Deutschland GmbH & Co. KG, 33034 Brakel (DE)
(72) Erfinder: Vornefeld, Mathias, 33034 Brakel (DE)
(74) Vertreter: Ostermann, Thomas

(56) Entgegenhaltungen:
- DE-A1- 4 141 878
- JP-A- 5 064 704

## Beschreibung

Die Erfindung betrifft eine Zentrifuge zum Trennen oder kombinierten Mischen und Trennen von Fluiden, mit einem Gehäuse, mit einem zylinderförmigen Rotor innerhalb des Gehäuses, der in einem Abstand zu einer Wand des Gehäuses gelagert ist und in dem eine Trennkammer mit Rotoreinbauten zum Trennen von Fluiden angeordnet ist, mit mindestens einem Einlass für Fluide, mit einem ersten Auslass für ein getrenntes leichtes Fluid und mit einem zweiten Auslass für ein getrenntes schweres Fluid, wobei der erste Auslass und der zweite Auslass auf einer einem Boden des Gehäuses abgewandten Seite der Trennkammer angeordnet sind.

Aus der DD 231 294 A1 ist eine Zentrifuge zum Mischen und Trennen von Fluids bekannt, wobei in einem unteren Endbereich eines Gehäuses der Zentrifuge mindestens zwei Flüssigkeiten als Fluide vermischt werden. Innerhalb des Gehäuses ist ein zylinderförmiger Rotor angeordnet, in dem Mittel zum Trennen der Flüssigkeiten bzw. eine Trennkammer angeordnet sind. Der zylinderförmige Rotor wird mittels eines Antriebs in Rotation versetzt, so dass in der Trennkammer eine Trennung der eine unterschiedliche Dichte aufweisenden Flüssigkeiten erfolgt, wobei mittels ringförmiger Sammler eine erste schwere Phase über einen ersten Auslass und eine zweite leichte Phase über einen zweiten Auslass abgeleitet werden können. Die Flüssigkeiten werden über einen gemeinsamen in axialer Richtung orientierten Einlass des Gehäuses der Mischkammer zugeführt.

Aus der DE 41 41 878 C2 ist eine Zentrifuge zum Mischen und Trennen von Fluids bekannt, wobei in einem Gehäuse der Zentrifuge ein mittels eines Antriebs drehbar angeordneter zylinderförmiger Rotor angeordnet ist. Dieser Rotor ist in einem Abstand zu einer Wand des Gehäuses gelagert und weist eine Trennkammer mit Mitteln zum Trennen der Fluide auf, so dass über einen ersten Auslass eine schwere Phase des Fluids und über einen zweiten Auslass eine leichte Phase des Fluids abförderbar sind. In einem unteren Stirnbereich des Gehäuses weist der Rotor eine axiale Öffnung als Einlass auf, durch den die Fluide in den Innenraum des Rotors einströmen können. Die Fluide werden radial von außen zugeführt, wobei sich ein in radialer Richtung nach innen verjüngender Förderweg ausbildet, der von einer stirnseitigen Wandung des Rotors und einem durchgehenden Boden des Gehäuses begrenzt wird. Bei dieser bekannten Zentrifuge ist der Rotor ausschließlich an einem oberen Stirnende des Gehäuses gelagert angeordnet.

Nachteilig an den bekannten Zentrifugen ist, dass sie für Misch-, Trenn- und Selbstreinigungsvorgänge umgebaut werden müssen.

Aufgabe der vorliegenden Erfindung ist es, eine Zentrifuge derart weiterzubilden, dass ohne Montageaufwand ein variabler Einsatz der Zentrifuge gewährleistet ist. Dabei soll ein Rotor der Zentrifuge entweder an einer oberen und unteren Lagerstelle des Gehäuses oder nur an einer oberen Lagerstelle des Gehäuses gelagert sein.

Diese Aufgabe wird gelöst durch den Gegenstand von Anspruch 1.

Die Erfindung ermöglicht insbesondere eine scherkraftärmere Zuführung von Fluiden in einen Rotor. Grundgedanke der Erfindung ist es, eine Flüssig-Zentrifuge bereitzustellen, die durch die Zuführung von Fluiden an unterschiedlichen Stellen unterschiedliche Aufgabenstellungen erfüllt. Durch die erfindungsgemäße Ausgestaltung des Bodens wird der Einsatz der Zentrifuge für Misch-, Trenn- und Selbstreinigungsvorgänge ohne Umbaumaßnahmen ermöglicht.

Bei den Zentrifugen mit einem doppelt gelagerten Rotor kann ein Selbstreinigungsvorgang der Zentrifuge durch einen Spülanschluss der unten verfügbaren hohlen Rotorwelle erfolgen. Ferner kann ein reiner Trennprozess mittels der Zuführung der Fluide durch den Fluidkanal erfolgen. Ferner werden für Mischvorgänge die Fluide über eine in einem axialen Abstand zu dem Boden angeordnete Zulaufebene zugeführt und in einem Spalt (Mischkammer) zwischen dem Rotor und der Gehäusewand gemischt und anschließend im Rotor separiert. Bei den Zentrifugen mit einem einfach oben gelagerten Rotor erfolgt die gleiche Fluidzuführung wie bei dem doppelt gelagerten Rotor.

Nach einer bevorzugten Ausführungsform der Erfindung ist der Fluidkanal einstückig mit einer im Stirnbereich des Gehäuses befestigbaren Bodenplatte verbunden, wobei eine Bodenwandung des Fluidkanals durch einen Ausschnitt der Bodenplatte gebildet ist. Der Fluidkanal weist darüber hinaus von der Bodenplatte abragende Seitenwandungen und eine parallel zu der Bodenwandung verlaufende Deckenwandung auf, so dass ein definierter Fluidkanal gebildet ist.

Nach einer Weiterbildung der Erfindung ist eine Auslassbohrung des Fluidkanals durch einen Ring der Bodenplatte begrenzt. In Umfangsrichtung sind benachbart zu dem Fluidkanal beabstandet zueinander angeordnete spiralförmige Wandungen angeordnet, die dem Trennvorgang förderlich sind. Der mit Ausnahme der Auslassbohrung geschlossene Ring der Bodenplatte verhindert ein unerwünschtes Strömen der Fluide in die durch die spiralförmigen Seitenwandungen begrenzten Bereiche.

Bei einer Ausführungsform der Zentrifuge, bei der der Rotor in einem oberen Stirnbereich und in einem unteren Stirnbereich des Gehäuses gelagert ist, ist ein Innendurchmesser des Rings größer als ein Außendurchmesser einer Lagerwelle des Rotors, so dass ein Ringkanal gebildet ist, mittels dessen die Fluide in axialer Richtung in den Rotor einströmen können.

Ein Ausführungsbeispiel der Erfindung wird nachfolgend anhand der Zeichnungen näher erläutert.

Es zeigen:
- Figur 1: eine schematische Seitenansicht einer Zentrifuge mit einem doppelt gelagerten Rotor, wobei ein Gehäusebereich der Zentrifuge geschnitten darge-stellt ist,
- Figur 2: eine Draufsicht auf eine Bodenplatte mit einem integrierten Fluidkanal,
- Figur 3: einen Querschnitt durch die Bodenplatte gemäß Figur 2 und
- Figur 4: einen Teilschnitt entlang der Schnittlinie IV - IV der Bodenplatte gemäß Figur 2.

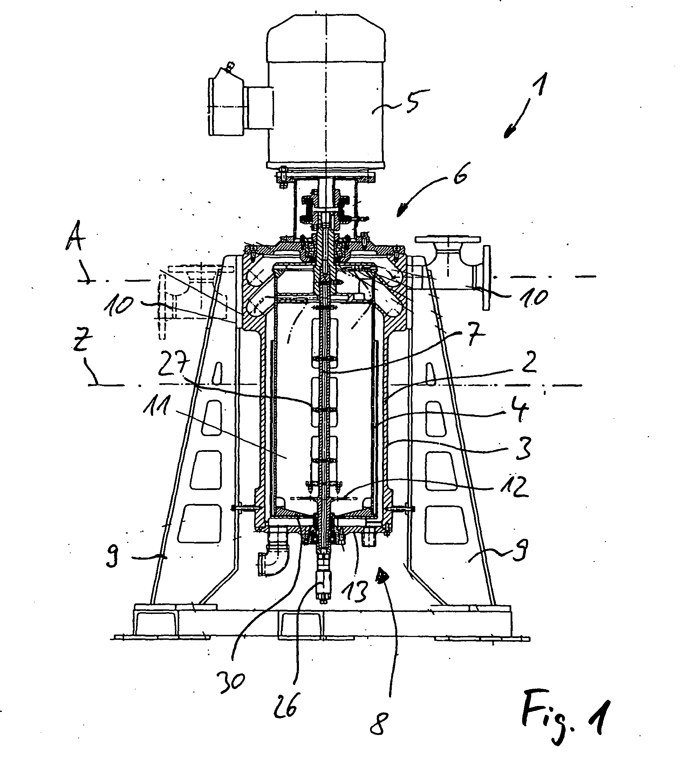

Eine Zentrifuge 1 gemäß Figur 1 ist als ein Flüssig-Flüssig-Zentrifuge für Trenn- als auch für Misch- und Trennaufgaben ausgebildet, die im Wesentlichen durch ein röhrenförmiges Gehäuse 2, einem in einem Abstand zu einer Wand 3 (Umfangswand) des Gehäuses 2 angeordneten Rotor 4 und einem Antrieb 5 gebildet ist. Der Antrieb 5 ist als ein Elektromotor ausgebildet, der sich oberhalb eines oberen Stirnbereiches 6 des Gehäuses 2 erstreckt. Der Antrieb 5 treibt über eine flexible Kupplung eine hohle Rotorwelle 7 an, die sich koaxial zu dem Gehäuse 2 und dem Rotor 4 erstreckt. Der Rotor 4 ist in dem oberen Stirnbereich 6 des Gehäuses 2 und in einem gegenüberliegenden unteren Stirnbereich 8 des Gehäuses 2 drehfest und/oder einstückig mit der Antriebswelle 7 verbunden.

Das Gehäuse 2 ist über verteilt in Umfangsrichtung aufrecht angeordnete Füße 9 aufrecht gelagert. In einer horizontalen Zulaufebene Z, die sich im Bereich einer Quermittelebene des Rotors 4 befindet, sind an gegenüberliegenden Seiten des Gehäuses 2 jeweils ein Zulauf (nicht dargestellt) für jeweils ein Fluid (Flüssigkeit) angeordnet, so dass eine erste Flüssigkeit und eine zweite Flüssigkeit in einem Spalt (kreisringförmige Mischkammer) zwischen der Umfangswand 3 des Gehäuses 2 und einer Umfangswand des Rotors 4 gemischt werden.

In einem oberen Bereich des Gehäuses 2 sind in einer horizontalen Ablaufebene A an gegenüberliegenden Seiten des Gehäuses 2 zwei Abläufe 10 für die separierten Flüssigkeiten vorgesehen.

Im Zentrifugalfeld (Trennkammer 11) des rotierenden Rotors 4 werden unmischbare Fluide unterschiedlicher Dichte mit Hilfe von Rotoreinbauten 12 separiert.

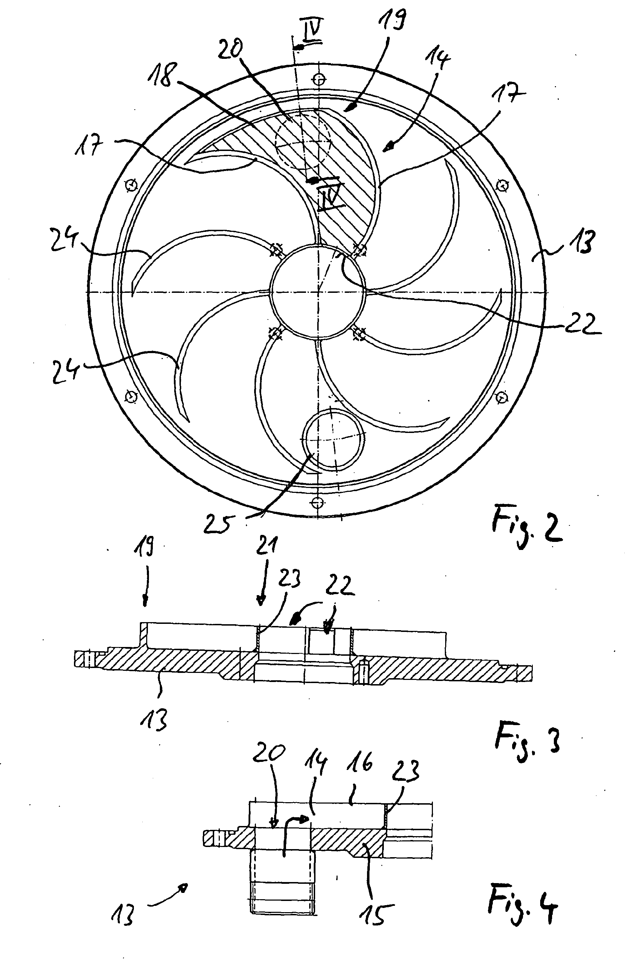

Wie aus Figur 2 ersichtlich ist, weist eine im unteren Stirnbereich 8 des Gehäuses 2 angeordnete Bodenplatte 13 auf einer dem Rotor 4 zugewandten Seite eine Mehrzahl von spiralförmigen Wandungen 24 auf, die in Umfangsrichtung der Bodenplatte 13 in einem Abstand zueinander angeordnet sind. Die Bodenplatte 13 bildet den Boden des Gehäuses 2. Zwischen zwei spiralförmigen Wandungen 24 ist ein Fluidkanal 14 ausgebildet. Der Fluidkanal 14 erstreckt sich im Wesentlichen in radialer Richtung und ist im Wesentlichen begrenzt durch ein mittels eines Ausschnitts der Bodenplatte 13 gebildeten Bodenwandung 15, durch eine parallel zu Bodenwandung 15 verlaufende Deckenwandung 16, zwei spiralförmig und in einem Abstand zwischen der Bodenwandung 15 und der Deckenwandung 16 verlaufende Seitenwandungen 17 sowie eine zwischen der Bodenwandung 15 und der Deckenwandung 16 verlaufende äußere Umfangswandung 18.

Zur Zuführung des Fluids in den Fluidkanal 14 ist an einem in radialer Richtung äußeren Endbereich 19 der Bodenplatte 13 eine Einlassbohrung 20 vorgesehen, die in axialer Richtung orientiert angeordnet ist. Zum Abführen des Fluids in die Trennkammer 11 des Rotors 4 ist in einem in radialer Richtung inneren Endbereich 21 der Bodenplatte 13 ein Auslass 22 vorgesehen, der parallel versetzt zur Einlassbohrung 20 verläuft und der in axialer Richtung orientiert angeordnet ist. Die Einlassbohrung 20 ist an einem äußeren Ende des Fluidkanals 14 im Wesentlichen senkrecht zur Erstreckung des Fluidkanals 14 angeordnet. Der Fluidkanal 14 erstreckt sich im Wesentlichen bogenförmig in radialer Richtung von einem äußeren Umfangsabschnitt der Bodenplatte 13 zu einem Zentralbereich 21 derselben. In dem Zentralbereich 21 mündet der Auslass 22 des Fluidkanals 14, wobei der Auslass 22 gebildet ist durch einen Ringspalt, der sich zwischen einem koaxial zu dem Rotor 4 verlaufenden Ring 23 der Bodenplatte 13 und einer einen größeren Durchmesser aufweisenden stirnseitigen Öffnung der Rotorbodenplatte 30 erstreckt.

Damit das Fluid durch die Auslassbohrung 22 in die Trennkammer 11 des Rotors 4 einströmen kann, ist ein Innendurchmesser des Rings 23 größer ausgebildet als ein Außendurchmesser der Welle 7 (Lagerwelle) des Rotors 4 und kleiner ausgebildet als ein Durchmesser der stirnseitigen Öffnung der Rotorbodenplatte 30. Hierdurch wird ein Ringspalt gebildet, durch den das Fluid in den Innenraum des Rotors 4 einströmen kann.

Der Fluidkanal 14 ermöglicht ein Zuführen des Fluids zu dem Rotor 4 in axialer Richtung, wobei durch die im Wesentlichen radiale Ausrichtung des Fluidkanals 14 ein radial versetztes axiales Anströmen des Fluids bewirkt wird. Hierdurch kann insbesondere eine scherkraftarme Zuführung des Fluids gewährleistet werden.

Auf einer dem Fluidkanal 14 gegenüberliegenden Seite der Bodenplatte 13 ist eine Auslassöffnung 25 vorgesehen zum Ablassen der Fluide aus dem Gehäuse 2.

Die Bodenplatte 13 weist eine zentrale Bohrung auf, so dass die hohlförmig ausgeführte Rotorwelle 7 mit einem außerhalb des Gehäuses 2 angeordneten Spülanschluss 26 verbunden ist. Über diesen Spülanschluss 26 kann ein Selbstreinigungsvorgang der Zentrifuge 1 erfolgen. Über eine Mehrzahl von längs der Rotorwelle 7 angeordnete Spritzdüsen 27 kann eine Waschlösung den Rotor 4 innenseitig reinigen.

Die dargestellte Zentrifuge 1 erfüllt folgende Aufgabenstellungen ohne Umbau.
1.Mischen und Trennen der Fluide: Dabei fließen über die Zulaufebene Z zwei Fluide in den Spalt/Mischkammer, treten dann unter Umgehung des Fluidkanals 14 von unten durch den zwischen dem Ring 23 und der Rotorwelle 7 angeordneten Ringspalt in den Rotor 4 ein, werden dort separiert und fließen dann über die Abläufe 10 ab.
2. Trennen der Fluide: Die zu separierenden Fluide treten über den Zulauf 20 durch den einstückig mit der Bodenplatte 13 verbundenen Fluidkanal 14 scherkraftarm in den Rotor 4 ein, in dem sie separiert werden und aus dem sie dann abfließen.
3. Selbstreinigung: Die Waschlösung wird hierbei über die hohle Rotorwelle 7 in den Rotor 4 eingeleitet.

## Patentansprüche

1. Zentrifuge zum Trennen sowie zum kombinierten Mischen und Trennen von Fluiden, mit einem Gehäuse (2), mit einem zylinderförmigen Rotor (4) innerhalb des Gehäuses (2), der in einem Abstand zu einer Wand (3) des Gehäuses (2) gelagert ist und in dem eine Trennkammer (11) mit Rotoreinbauten zum Trennen von Fluiden angeordnet ist, mit mindestens einem Einlass für Fluide, mit einem ersten Auslass (10) für ein getrenntes leichtes Fluid und mit einem zweiten Auslass (10) für ein getrenntes schweres Fluid, wobei der erste Auslass (10) und der zweite Auslass (10) auf einer einem Boden (13) des Gehäuses (2) abgewandten Seite der Trennkammer (11) angeordnet sind, **dadurch gekennzeichnet, dass** der Boden (13) des Gehäuses (2) mindestens zwei voreinander getrennte Fluidführungen aufweist, wobei bei der ersten Fluidführung für einen Trennvorgang in dem Boden (13) ein Fluidkanal (14) integriert ist, der von zwei von dem Boden (13) abragenden Seitenwandungen (17), einer die Seitenwandungen (17) verbindenden äußeren Umfangswandung (18) und einer zu dem Boden (13) gegenüberliegenden Deckenwandung (16) begrenzt ist und der sich zwischen einem in radialer Richtung äußeren Umfangsbereich und einem Zentralbereich des Bodens (13) erstreckt, derart, dass die Fluide dem Rotor (4) unter radialer Versetzung in axialer Richtung scherkraftarm zugeführt werden, und wobei bei der zweiten Fluidführung zum kombinierten Mischen und Trennen die Fluide nach Mischung in einer zwischen der Umfangswandung des Gehäuses (2) und einer Umfangswandung des Rotors (4) angeordneten Mischkammer unter Umgehung des Fluidkanals (14) mittels spiralförmiger, von dem Boden (13) abragender Wandungen (24) in den Rotor (4) zugeführt werden und wobei ein Ringspalt zwischen einem Ring (23) des Bodens (13) und einer Welle (7) des Rotors (4) gebildet wird, sodass bei beiden Fluidführungen die Fluide durch diesen Ringspalt dem Rotor in axialer Richtung zuführbar sind.

2. Zentrifuge nach Anspruch 1, **dadurch gekennzeichnet, dass** der Fluidkanal (14) des Bodens im Wesentlichen in radialer Richtung verläuft, wobei eine Einlassbohrung (20) an einem äußeren Ende des Fluidkanals (14) und dem Ringspalt am inneren Ende des Fluidkanals (14) angeordnet sind.

3. Zentrifuge nach Anspruch 1 oder 2, **dadurch gekennzeichnet, dass** der Fluidkanal (14) einstückig mit einem lösbar an einem unteren Stirnbereich (8) des Gehäuses (2) befestigten Bodenplatte (13) verbunden ist, wobei eine Bodenwandung (15) des Fluidkanals (14) durch einen Ausschnitt der Bodenplatte (13).gebildet ist.

4. Zentrifuge nach einem der Ansprüche 1 bis 3, **dadurch gekennzeichnet, dass** die Seitenwandungen (17) sich bogenförmig und/oder spiralförmig von dem äußeren Ende zu dem inneren Ende des Fluidkanals (14) erstrecken.

5. Zentrifuge nach einem der Ansprüche 1 bis 4, **dadurch gekennzeichnet, dass** die Einlassbohrung (20) des Fluidkanals (14) parallel versetzt zu einem durch den Ringspalt gebildeten Aulass (22) des Fluidkanals (14) angeordnet ist.

6. Zentrifuge nach Anspruch 5, **dadurch gekennzeichnet, dass** die spiralförmigen Wandungen (24) und die spiralförmigen Seitenwandungen (17) des Fluidkanals (14) in radialer Richtung nach innen zu einem koaxial zu dem Rotor (4) angeordneten Ring (23) zusammenlaufen.

7. Zentrifuge nach Anspruch 6, **dadurch gekennzeichnet, dass** der Durchmesser des Rings (23) größer ist als ein Durchmesser einer Welle (7) des Rotors (4) und dass der Durchmesser des Rings (23) kleiner ist als ein Durchmesser der stirnseitigen Öffnung der Rotorbodenplatte (30).

## Claims

1. Centrifuge for separating and combined mixing plus separating fluids, comprising a housing (2), a cylindrical rotor (4) inside said housing (2) which is spaced from a wall (3) of said latter and in which a separating chamber (11) with rotor internal elements for separating fluids, at least one fluids inlet, and a first outlet (10) for separated light type fluid as well as a second outlet (10) for separated heavy type fluid, said first and second outlets (10) being disposed on a side of the separating chamber (11) that is facing away from a bottom (13) of the housing (2), **characterized by** the fact that the bottom (13) of the housing (2) has at least two separate fluid passages in the first one of which a fluid channel (14) is integrated into the bottom (13) for separating which is confined by two sidewall members (17) protruding from said bottom (13), an outer cir-cumferential wall member (18) joining said sidewall members (17) and a top wall member (16) opposite said bottom (13) that extends between a radially outer circumferential section and a central section of the bottom (13) such that the fluids are axially fed to the rotor (4) in a radially offset and low-gravity mode, and in the second one of which for combined mixing plus separating the fluids are after mixing inside a mixing chamber between the circumferential wall member of the housing 2 and a circumferential wall member of the rotor (4) fed into said latter rotor (4), while bypassing the fluid channel (14), by means of spiral-shaped walls (24) protruding from the bottom (13) wherein an annular gap is formed between a ring (23) of the bottom (13) and a shaft (7) of said rotor (4) such that via both fluid passages the fluids can be fed to the rotor in axial direction across said annular gap.

2. Centrifuge according to Claim 1, **characterized by** the fact that the fluid channel (14) in the bottom extends substantially in radial direction and that an inlet bore (20) is provided at one outer end of the fluid channel (14) and the annular gap at the inner end of the fluid channel.

3. Centrifuge according to Claim 1 or 2, **characterized by** the fact that the fluid channel (14) is integral with a bottom plate (13) which is detachably fixed to a lower face end area (8) of the housing (2) and that a bottom wall member (15) of said fluid channel (14) is formed by a recess in said bottom plate (13).

4. Centrifuge according to any of the preceding Claims 1 to 3, **characterized by** the fact that the sidewall members (17) extend from the outer end to the inner end of the fluid channel (14) in a curved and/or spiral-shaped pattern.

5. Centrifuge according to any of the preceding Claims 1 to 4, **characterized by** the fact that the inlet bore (20) of the fluid channel (14) is parallelly offset relative to an outlet (22) formed by the annular gap of the fluid channel,

6. Centrifuge according to Claim 5, **characterized by** the fact that the spiral-shaped wall members (24) and the spiral-shaped sidewall members (17) of the fluid channel (14) converge radially inward into a ring (23) that is disposed in coaxial relation with the rotor (4).

7. Centrifuge according to Claim 6, **characterized by** the fact that the diameter of the ring (23) is larger than a diameter of a shaft (7) of the rotor (4) and smaller than a diameter of the end-face opening of the rotor bottom plate (30).

## Revendications

1. Centrifugeuse pour la séparation, ainsi que pour le mélange et la séparation combinés de fluides, avec un carter (2), avec, à l'intérieur dudit carter (2), un rotor (4) en forme de cylindre, qui est monté à distance d'une paroi (3) du carter (2), et dans lequel est disposée une chambre de séparation (11) avec des chicanes de rotor pour la séparation des fluides, avec au moins une admission de fluides, avec une première sortie (10) pour un fluide léger, séparé, et avec une deuxième sortie (10) pour un fluide lourd, séparé, la première sortie (10) et la deuxième sortie (10) étant disposées sur un côté de la chambre de séparation (11), situé à l'opposé du fond (13) du carter (2), **caractérisée en ce que** le fond (13) du carter (2) présente au moins deux conduites de fluides séparées l'une de l'autre, dans la première desquelles est intégré, pour un processus de séparation, un canal de fluides (14), qui est limité par deux parois latérales (17) en saillie du fond (13), une paroi circonférentielle (18) reliant les parois latérales (17), et une paroi formant plafond (16), située à l'opposé du fond (13), et qui s'étend entre une zone circonférentielle extérieure dans la direction radiale, et une zone centrale du fond (13), de telle manière que les fluides sont amenés au rotor sous de faibles forces de cisaillement/sous faible cisaillement, en étant déplacés radialement, dans la direction axiale, et que, dans la deuxième conduite de fluides, pour combiner mélange et séparation, les fluides, après avoir été mélangés dans une chambre de mélange, disposée entre la paroi circonférentielle du carter (2) et une paroi circonférentielle du rotor (4), sont amenés dans le rotor (4), en contournant le canal de fluides (14), à l'aide de parois hélicoïdales (24), en saillie du fond (13), et une rainure annulaire étant formée entre l'anneau (23) du fond (13) et un arbre (7) du rotor (4), de sorte que, en ce qui concerne les deux conduites de fluides, lesdits fluides peuvent être amenés au rotor, dans la direction axiale, par cette rainure annulaire.

2. Centrifugeuse selon la revendication 1, **caractérisée en ce que** le canal de fluides (14) du fond s'étend essentiellement dans la direction radiale, un alésage d'admission (20) étant disposé à une extrémité extérieure dudit canal de fluides (14), et la rainure annulaire étant disposée à l'extrémité intérieure dudit canal de fluides (14).

3. Centrifugeuse selon revendication 1 ou 2,
**caractérisée en ce que** le canal de fluides (14) est relié d'une pièce à une plaque de fond (13), qui est fixée de manière amovible à une section frontale (8) inférieure du carter (2), une paroi de fond (15) du canal de fluides (14) étant formée par une tranche de la plaque de fond (13).

4. Centrifugeuse selon l'une des revendications 1 à 3, **caractérisée en ce que** les parois latérales (17) s'étendent en forme d'arc et / ou de spirale, de l'extrémité extérieure vers l'extrémité intérieure du canal de fluides (14).

5. Centrifugeuse selon l'une des revendications 1 à 4, **caractérisée en ce que** l'alésage d'admission (20) du canal de fluides (14) est disposé en étant décalé parallèlement par rapport à une sortie (22) du canal de fluides (14), qui est formée par la rainure annulaire.

6. Centrifugeuse selon la revendication 5, **caractérisée en ce que** les parois hélicoïdales (24) et les parois latérales (27) du canal de fluides (14) convergent, dans la direction radiale, vers l'intérieur, jusqu'à un anneau (23), disposé coaxialement par rapport au rotor (4).

7. Centrifugeuse selon la revendication 6, **caractérisée en ce que** le diamètre de l'anneau (23) est plus grand qu'un diamètre d'un arbre (7) du rotor (4) et que le diamètre de l'anneau (23) est plus petit qu'un diamètre de l'ouverture frontale de la plaque de fond (30) du rotor.
